# EUROPÄISCHE PATENTSCHRIFT

(11) **EP 3 559 505 B1**
(45) Veröffentlichungstag und Bekanntmachung des Hinweises auf die Patenterteilung: **09.02.2022**
(21) Anmeldenummer: 17832240.0
(22) Anmeldetag: 22.12.2017
(51) Int. Cl.: F16G 13/16

(54) **SYSTEME ZUR ÜBERWACHUNG DES BETRIEBS EINER ENERGIEFÜHRUNGSKETTE**
SYSTEMS FOR MONITORING THE OPERATING OF A CABLE DRAG CHAIN
SYSTÈME POUR SURVEILLER LE FONCTIONNEMENT D'UNE CHAÎNE PORTE-CÂBLES

(30) Priorität: 23.12.2016 DE 202016107317 U
(43) Veröffentlichungstag der Anmeldung: 30.10.2019
(60) Teilanmeldung: 21206575.9
(73) Patentinhaber: Igus GmbH, 51147 Köln (DE)
(72) Erfinder: HERMEY, Andreas, 53773 Hennef (DE); JAEKER, Thilo-Alexander, 53757 Sankt Augustin (DE); BARTEN, Dominik, 53340 Meckenheim (DE); HABERING, Richard, 51143 Köln (DE); SCHMER, Konstantin, 50827 Köln (DE)
(74) Vertreter: Lippert Stachow Patentanwälte Rechtsanwälte
(86) Internationale Anmeldenummer: PCT/EP2017/084570
(87) Internationale Veröffentlichungsnummer: WO 2018/115528

(56) Entgegenhaltungen:
- DE-U1- 20 312 266
- DE-U1-202004 005 858
- DE-U1-202014 104 075

## Beschreibung

Die Erfindung betrifft allgemein die Überwachung des Betriebs wenigstens einer Energieführungskette oder einer ähnlichen aktiven bzw. dynamischen Leitungsführungseinrichtung.

Energieführungsketten werden zum Führen mindestens einer Versorgungsleitung zwischen einer Basis bzw. einem Festpunkt und einem dazu relativbeweglichen Mitnehmer verwendet. Sie bilden dabei typisch ein bewegliches Trum, ein stationäres Trum und dazwischen einen Umlenkbogen, wobei der Umlenkbogen mit der halben Geschwindigkeit des Mitnehmers verfährt. Typisch führt die Energieführungskette mehrere Versorgungsleitungen, wie Kabel zur elektrischen Leistungs- und/oder Signalversorgung und Schläuche zur Versorgung mit flüssigen oder gasförmigen Betriebsmitteln.

Im Normalbetrieb bzw. bei bestimmungsgemäßem Betrieb der Energieführungskette wird der bewegliche Trum durch den Mitnehmer in Verfahrrichtung gezogen bzw. geschoben. Die Kette verursacht aufgrund von Reibung und Trägheit eine der Bewegung entgegengesetzte Kraft und wird, je nach Länge und Gewicht, z.T. erheblichen Zug- bzw. Druckkräften ausgesetzt. Besonders wegen Druckkräften kann es, vor allem bei Energieführungsketten mit hohen Geschwindigkeiten und/oder langen Verfahrwegen, während des Betriebs zu Fehlerzuständen kommen. Der Normalbetrieb der Energieführungskette kann wegen Verschleiß aber auch aufgrund eines externen Fehlers oder Defekts, zum Beispiel eines Steuerungsfehlers der zur Überschreitung des maximalen Verfahrwegs führt, oder eines Störobjekts bzw. Hindernisses gestört werden. In derartigen Fällen kann es zu Fehlerzuständen der Kette kommen, wie z.B. zu einem Ausbrechen des beweglichen Trums in Schubrichtung vor dem Umlenkbogen, zu einem vom ordnungsgemäßen Verlauf abweichenden Bogenverlauf, zu einem Austreten aus einer Führung, usw. bis hin zum Bruch der Kette.

Die Erfindung betrifft in diesem Kontext insbesondere ein Überwachungssystem zur frühzeitigen Erkennung solcher Fehlerzustände, wobei das System mit mindestens einem Geber, der wenigstens eine vom Zustand der Energieführungskette abhängige Ausgabe erzeugt und mit einer Auswerteeinheit ausgerüstet ist. Die Auswerteeinheit wertet die Ausgabe des Gebers aus, um zu überwachen, ob im Betrieb der Energieführungskette ein kritischer Zustand auftritt, insbesondere bevor die Energieführungskette mit den darin geführten Leitungen beschädigt wird.

Ein solches System ist bereits aus der WO 2004/090375 A1 bekannt und wurde durch die Anmelderin erfolgreich am Markt eingeführt. Hierbei wird durch einen oder mehrere als Kraftsensor ausgebildete Geber erfasst, welche Kräfte auf die Energieführungskette wirken. Die Auswerteeinheit vergleicht die erfassten Kräfte mit einem vorbestimmten Toleranzbereich, um zu erkennen, ob eine Fehlfunktion eintritt.

Eine Weiterentwicklung des Kraftsensors wird in der WO 2013/156607 A1 vorgeschlagen. Hierbei wird vorgeschlagen, zur sichereren Messung mehrere Kraftaufnehmer als Sensoren in Kraftübertragung zwischen den Mitnehmer und die entsprechende Anschlussstelle bzw. Endbefestigungsteile der Energieführungskette anzuordnen. Die Kraftaufnehmer messen die an dieser Endseite auf die Energieführungskette ausgeübte Kraft, welche als zustandsabhängige Größe überwacht wird.

In der WO 2009/095470 A1 bzw. EP 2 235 396 A1 ist ebenfalls eine Kraftmessung zwecks Sicherheitsabschaltung offenbart. Dabei wird die Energieführungskette in Abhängigkeit einwirkender Kräfte von der versorgten Anlage, Maschine oder dgl. getrennt.

Diese vorbekannten Ansätze überwachen, ob unzulässig hohe Kräfte auftreten um gegebenenfalls bereits vor einer Beschädigung, insbesondere vor einem Bruch, der Energieführungskette einzugreifen. Auf Grundlage einer Kraftmessung, d.h. einer messtechnisch quantitativen Größen-Erfassung, lassen sich viele Störfälle früh erkennen.

Die WO 2009/095470 A1 (vgl. S. 11) schlägt ferner vor, entlang des Verfahrweges eine Anzahl Kontaktmittel vorzusehen, welche in Kontakt mit der Energieführungskette gelangen können. Diese Kontaktmittel generieren ein Signal, dessen Auswertung eine Betriebsänderung, insbesondere die vorgenannte Trennung der Energieführungskette von der Maschine veranlassen kann.

Eine zuverlässige Aussage über die aktuelle Lage der Energieführungskette, insbesondere dahingehend, ob die Energieführungskette insgesamt einen nominalen Verlauf zeigt, lässt sich jedoch mit den vorbekannten Systemen nicht unbedingt treffen.

Ein weiterer Ansatz, der nicht auf einer eigentlichen Messung im Sinne der Messtechnik beruht, wurde von der Anmelderin im Gebrauchsmuster DE 20 2004 005 858 U1 vorgeschlagen. Hier wird, bei einer Auswahl einiger weniger Kettenglieder der Energieführungskette, jeweils am oder im Kettenglied ein einfacher, schalterartiger Geber angeordnet, mit dem eine Verschwenkung des Kettengliedes über einen bestimmten Winkelbereich hinaus registrierbar sind. Hierzu kann z.B. ein als Quecksilberschalter ausgeführter Schwerkraftschalter vorgesehen sein, welcher die räumliche Orientierung des jeweiligen Kettenglieds erfasst. Anhand einer Mehrzahl derartiger Geber in der Energieführungskette lässt sich die aktuelle Lage nur relativ grob überwachen, insbesondere dahingehend, ob der Umlenkbogen einen nominalen Verlauf zeigt. Diese Lösung ist zudem aufwendig, da mit der Anzahl zusätzlicher Vorrichtungen an bzw. in der Energieführungskette erheblicher Verkabelungsaufwand einhergeht.

Es sind ferner auch gattungsfremde Systeme bekannt, die nur einen bereits eingetretenen Kettenbruch erkennen. Dies erlaubt jedoch keine Früherkennung, z.B. für vorbeugende Wartung, und vermeidet einen unerwünschten Ausfall nicht.

Eine erste Aufgabe der Erfindung ist es mithin, ein Überwachungssystem vorzuschlagen, das eine genauere Aussage über den aktuellen Zustand der Energieführungskette, insbesondere über den Verlauf, ermöglicht, ohne dass hiermit ein erheblich erhöhter Verkabelungsaufwand einhergeht.

Die Erfindung schlägt zur Lösung der obengenannten Aufgabe ein Überwachungssystem mit den Merkmalen des Anspruchs 1 vor.

Eine zweite unabhängige Aufgabe der Erfindung besteht darin, ein System vorzuschlagen, das eine Aussage über die Lebensdauer, insbesondere die verbleibende Restlebensdauer der Energieführungskette, ermöglicht, beispielsweise zum Zweck vorbeugender Wartung. Hierzu wird gemäß einem unabhängigen zweiten Aspekt ein System mit den Merkmalen des Anspruchs 5 vorgeschlagen.

Vorteilhafte Ausführungsformen sind Gegenstand der Unteransprüche.

Die Energieführungskette ist allgemein eine aktive, dynamische Leitungsführungseinrichtung zum Führen mindestens einer Leitung zwischen einer ersten Anschlussstelle zum Anschluss an einer Basis und einer dazu relativbeweglichen zweiten Anschlussstelle zum Anschluss an einem Mitnehmer. Typischerweise ist die Basis ortsfest, und der Mitnehmer ist relativbeweglich, z.B. an einem bewegten Teil einer zu versorgenden Maschine oder Anlage angeordnet. Die Energieführungskette ist entlang eines Verfahrwegs verfahrbar und umfasst dabei in an sich bekannter Weise ein bewegliches Trum, ein stationäres Trum und einen beide Trume verbindenden Umlenkbogen dazwischen. Typischerweise verläuft die Bewegung der Energieführungskette in einer Ebene. Im Rahmen der Erfindung liegen jedoch auch Verläufe mit seitlicher Bewegung oder mit dreidimensionaler Bewegung, z.B. bei Robotern.

Das gattungsgemäße Überwachungssystem umfasst eine beliebige Energieführungskette sowie mindestens einen Geber allgemein, oder speziell wenigstens einen Messgrößen-Aufnehmer, der wenigstens eine vom Zustand der Energieführungskette abhängige Ausgabe erzeugt. Ferner wertet das gattungsgemäße System diese wenigstens eine Ausgabe aus, vorzugsweise anhand einer separaten Auswerteeinheit. Der Begriff Ausgabe (engl. "output") ist hier allgemein im Sinne einer Information zu verstehen. Sie wird typischerweise durch ein oder mehrere auszuwertende elektrische Signale, digital oder analog, übermittelt. Auch eine räumlich im oder an einem Geber bzw. in oder an einem Sensormodul mit dem Messgrößen-Aufnehmer integrierte Auswerteeinheit liegt im Rahmen der Erfindung.

Eine Auswerteeinheit kann am jeweiligen Ausgang als Ausgabe erzeugte Zustandswerte verarbeiten. Die Auswerteeinheit kann eine Menge von Zustandswerten insgesamt mit einer erwarteten Menge vergleichen. Die Auswerteeinheit kann auch z.B. jeden Wert einzeln mit einem vorbestimmten Sollwert oder Toleranzbereich bzw. Toleranzfeld vergleichen. Die Auswerteeinheit verarbeitet die Ausgaben in jedem Fall um frühzeitig zu erkennen, ob im Betrieb der Energieführungskette ein Fehlerzustand, z.B. unerwünschte Lage oder inkorrekter Verlauf, auftritt. Bei einer als kritisch festgestellten Diskrepanz kann die Auswerteeinheit ein Signal zum Anhalten des bewegten Maschinenteils, mit dem der Mitnehmer verbunden ist ausgeben, um einem Bruch der Energieführungskette vorzubeugen. Dabei kann die Verarbeitung insbesondere auf Soll- bzw. Vergleichswerten beruhen, die in einem Anlern-Modus der Auswerteeinheit vorbestimmt worden sind. Dies erfolgt z.B. indem der normale Betrieb schrittweise durchlaufen wird und die Auswerteeinheit die als Normale bzw. Referenzwerte anzusehenden, zur Auswertung nötigen Betriebsparameter aufzeichnet.

### ERSTER ASPEKT DER ERFINDUNG

Gemäß einem ersten Aspekt der Erfindung (nach Anspruch 1) wird die erste vorgenannte Aufgabe bereits dadurch gelöst, dass eine Vielzahl von Sensormodulen nicht stationär, sondern entlang der Länge der Energieführungskette verteilt an oder in dieser befestigt sind. So können die Sensormodule jeweils auf eine lokale Zustandsänderung der Energieführungskette, insbesondere unmittelbar im Bereich des Befestigungsorts, reagieren, auch wenn diese nur einen kleinen lokal begrenzten Teilabschnitt der Energieführungskette betrifft.

Vorteil von Sensoren in Modulbauweise, d.h. austauschbarer geschlossener Funktionseinheiten mit eigenem Messgrößen-Aufnehmer, ist die Kostenreduzierung auch bei einer hohen Anzahl von Sensoreinheiten in der Energieführungskette einerseits und eine zu einer Vielzahl bestehender Ketten-Baureihen passende Gestaltung, ggf. auch zwecks Nachrüstung. Unter Vielzahl wird dabei insbesondere eine hinreichend große Anzahl verstanden, die so gewählt ist, dass jedenfalls im störanfälligen Längsabschnitt der Energieführungskette stets mindestens ein Sensormodul im verfahrbaren Umlenkbogen liegt. So kann z.B. an jedem n-ten Kettenglied ein Sensormodul angebracht sein, wenn der Umlenkbogen nicht mehr als eine Anzahl von n Kettengliedern umfasst.

Die Sensormodule sind vorzugsweise so kompakt ausgeführt, dass diese in den Aufnahmeraum für die Leitungen innerhalb der Energieführungskette eingebaut werden können und dort nur einen geringen Raumanteil, z.B. <<10%, einnehmen. Denkbar sind auch Sensormodule die in Aussparungen an den Kettenlaschen aufgenommen, z.B. eingerastet werden.

Gemäß dem ersten Aspekt der Erfindung weist jedes Sensormodul erfindungsgemäß eine Kommunikationseinheit auf, das zur Übermittlung von Ausgaben an die Auswerteeinheit dient, wobei die Ausgaben von der messtechnisch erfassten Größe abhängen. Eine eigene Kommunikationseinheit kann dabei direkt in jedem Sensormodul vorgesehen sein, oder mehrere Sensormodule teilen eine gemeinsame Kommunikationseinheit in oder an der Energieführungskette. Durch geeignete Wahl der Technik der Kommunikationseinheit lässt sich auch bei einer relativ hohen Anzahl von Sensormodulen der Herstellungs- und Installationsaufwand überschaubar halten. Daneben können unterschiedlichste Ausgabewerte anhand geeigneter, vereinheitlicher Kommunikations-Protokolle übermittelt werden, auch verschiedene quantitative Messgrößen über den Zustand der Energieführungskette.

Dabei kann die Kommunikationseinheit zur drahtlosen Daten-Kommunikation über Funk oder zur drahtgebundenen Daten-Kommunikation über einen Datenbus ausgeführt sein. Funk-Kommunikation minimiert den Verkabelungsaufwand weitestgehend. Wenn jedoch ohnehin eine drahtgebundene Stromversorgung der Sensormodule erwünscht ist, kann zugleich ein drahtgebundener Daten-Bus, insbesondere ein Feld-Bus für Industrie-Automatisierung, eingesetzt werden. In beiden Fällen kommunizieren die Sensormodule vorzugsweise über ein Kommunikations-Protokoll mit Fehlerkorrektur betreffend die Datenübertragung. So erlaubt es die Kommunikationseinheit inhärent, auch bei starken elektromagnetischen Störfeldern zuverlässig zu übertragen bzw. zu überwachen.

Der Messgrößen-Aufnehmer kann quantitativ eine Messgröße erfassen, d.h. im Sinne der Messtechnik diese Messgröße messen.

Insbesondere zu diesem Zweck sieht eine bevorzugt Ausführungsform vor, dass jedes Sensormodul mindestens eine integrierte Schaltung hat, welche den Messgrößen-Aufnehmer aufweist. Unterschiedlichste Sensorik ist bereits in Form von integrierten Schaltungen, insbesondere in Halbleiter-Technik, zu geringem Preis verfügbar. Hierdurch werden besonders kleine Baugrößen der Module ermöglicht.

Ein Sensormodul mit integrierter Schaltung kann dabei als Messgrößen-Aufnehmer, vorzugsweise mindestens:
- einen Beschleunigungssensor, insbesondere einen 3-Achsen Beschleunigungssensor, zur quantitativen Erfassung einer kinematischen Größe, insbesondere der Beschleunigung, Geschwindigkeit und/oder Position;
- einen Lagesensor, z.B. einen MEMS-Drehratensensor, zur quantitativen Erfassung der räumlichen Orientierung; und/oder
- einen Höhensensor, zur quantitativen Erfassung einer absoluten Höhe im Raum;
umfassen und jeweils entsprechende Ausgaben an die Auswerteeinheit übermitteln. Kinematische Parameter, Raumlage und/oder absolute Höhe der verteilten Sensormodul erlauben, einzeln oder ggf. in Kombination von mindestens zwei dieser Größen, jeweils eine relativ präzise Aussage über den aktuelle Betriebszustand der Energieführungskette und insbesondere eine zuverlässige Überwachung dahingehend, ob dieser innerhalb von vorbestimmten nominalen Parametern ist. Insbesondere anhand von Beschleunigungssensoren lässt sich relativ präzise ermitteln, ob die Energieführungskette das gewünschte Normalverhalten zeigt und auch frühzeitig eine kritische Abweichung erkennen, um Bruch bzw. Stillstand zu vermeiden.

Alternativ zu komplexeren Sensormodulen mit digitalen IC ist auch denkbar, dass die Sensormodule als Messgrößen-Aufnehmer einen bewährten analogen Positionsgeber, z.B. ein Potentiometer oder dgl., umfasst, insbesondere um den relativen Schwenkwinkel zwischen zwei benachbarten Kettengliedern der Energieführungskette quantitativ zu erfassen, und entsprechende quantitative Ausgaben an die Auswerteeinheit übermittelt. So lässt sich z.B. leicht erkennen, ob in einem aktuell nicht im Umlenkbogen befindlichen Teilabschnitt ungewollte Krümmung entsteht.

Zur Energieversorgung hat jedes Sensormodul vorzugsweise einen Energiespeicher, insbesondere einen eigenen Energiespeicher. So kann z.B. eine kabelgebundene Stromversorgung gänzlich vermieden werden. Der Aufwand zur Verdrahtung wird auch reduziert, wenn jedes Sensormodul eine Schaltung zur kontaktlosen induktiven Energieübertragung, insbesondere mit einer Empfangsspule zur Nahfeld-Kopplung, aufweist. Zudem wird hierdurch ein Nachrüsten bzw. Austausch der Energieführungskette erleichtert. So können z.B. alle Sensormodul anhand derselben Versorgungsleitung versorgt werden, ohne dass eine Kontaktierung jeweils einzeln vorgenommen werden muss.

Zur Vermeidung zusätzlicher Kabel in der Energieführungskette ist es vorteilhaft, wenn die Kommunikationseinheit zur drahtlosen Kommunikation, insbesondere über Wi-Fi gemäß IEEE 802.11, ausgeführt ist und die Auswerteeinheit eine entsprechende Funk- bzw. Wi-Fi-Schnittstelle aufweist oder mit einem Funk- bzw. Wi-Fi-Schnittstellenmodul verbunden ist.

Alternativ kann die Kommunikationseinheit zur drahtgebundenen Kommunikation über einen Feld-Bus mit Linien-Topologie, insbesondere in Zweidraht-Technik, wie ASI-Bus, CAN-Bus oder dgl., ausgeführt sein. Dann sollte die Auswerteeinheit eine entsprechende Bus-Schnittstelle aufweisen oder mit einem Bus-Schnittstellenmodul verbunden sein.

Auch bei einem industriellen Feld-Bus mit Linien-Topologie wird der Aufwand zur Verdrahtung verringert, da alle Sensormodule an einer gemeinsamen Busleitung angeschlossen werden können.

In bevorzugter Ausführungsform wird die Kommunikationseinheit in Form einer integrierten Schaltung realisiert, insbesondere als Bestandteil des Sensormoduls, vorzugsweise in derselben Schaltung, welche den Messgrößen-Aufnehmer aufweist, oder getrennte mit letzterer verbundene integrierte Schaltung, d.h. es können auch getrennte ICs, z.B. über I2C verbunden, in jedem Sensormodul eingesetzt werden.

Zur einfachen Befestigung der Sensormodule ohne Änderung an der Bauweise der Energieführungskette kann jedes Sensormodule in einen lösbar an einem Kettenglied der Energieführungskette befestigten Quersteg oder in einen lösbar an einem Kettenglied der Energieführungskette befestigten Trennsteg integriert sein. Dies erlaubt ein leichtes Nachrüsten bestehender Energieführungsketten.

Auch bei Sensormodulen an bzw. in der Energieführungskette sind die Sensormodule bevorzugt in gleichmäßigem Abstand voneinander entlang der Längsrichtung der Energieführungskette angeordnet. Der Abstand ist dabei vorzugsweise kleiner oder gleich der Bogenlänge des Umlenkbogens, insbesondere kleiner oder gleich dem 1,6-fachen des Umlenkbogen-Radius, um eine hinreichend gute Genauigkeit der Lage-Erkennung zu erzielen.

Alle Ausführungsformen sind besonders vorteilhaft für Energieführungsketten mit abgleitendem oder abrollendem Obertrum, insbesondere für Energieführungsketten mit etwa horizontalem Verlauf die für lange Verfahrwege ausgeführt sind, typisch >5m, insbesondere >10m.

Zudem erlauben die meisten der vorgeschlagenen Überwachungssysteme bzw. die vorgeschlagenen Anordnungen insbesondere eine zwecks Überwachung einer Energieführungskette hinreichend genaue und laufende Positionsbestimmung, insbesondere des Umlenkbogens, in Bezug auf den Verfahrweg. Aus einer unerwarteten Positionsveränderung des Umlenkbogens lassen sich eine Vielzahl Störfälle auf einfache Weise erkennen.

Systeme nach dem ersten Aspekt erlauben insbesondere eine Funktionsüberwachung zwecks Sicherheitsabschaltung.

### ZWEITER ASPEKT DER ERFINDUNG

Der zweite Aspekt ermöglicht u.a. die nutzungsabhängige Vorhersage der Restlebensdauer von Energieketten und daring geführten Leitungen.

Gemäß dem unabhängigen zweiten Aspekt der Erfindung (nach Anspruch 5) wird die zweite vorgenannte Aufgabe bei einem System nach dem Oberbegriff aus Anspruch 5 bereits dadurch gelöst, dass mindestens ein Sensormodul, das an einem Endbereich des beweglichen Trums, welcher die zweiten Anschlussstelle aufweist, oder auch am Mitnehmer angeordnet ist. Dabei hat das vorgeschlagene Sensormodul mindestens einen Sensor zur quantitativen Erfassung einer kinematischen Größe, wie Beschleunigung, Geschwindigkeit und/oder Position, des mitnehmerseitigen Endbereichs des beweglichen Trums sowie eine Kommunikationseinheit zur Übermittlung von Ausgabedaten des Sensors, d.h. von Daten die auf Sensorausgaben in Abhängigkeit erfasster kinematischer Größen beruhen, an eine Schnittstelle und/oder eine Auswerteeinheit zur weiteren Datenverarbeitung.

Bereits durch die laufende Erfassung von Daten betreffend das dynamische Verhalten der Energieführungskette, wie z.B. die Anzahl der gefahrenen Hin- und Herfahr-Zyklen, oder präzisere Daten zum tatsächlich gefahrenen Verfahrweg kann rechentechnisch eine Vorhersage der verbleibenden Nutzungs- bzw. Restlebensdauer ermittelt werden, z.B. durch Vergleich mit empirischen Daten aus einer ggf. virtuellen Lebensdauerberechnung. Ein Sensormodul wie weiter oben vorgeschlagen erlaubt für sich genommen das Aus- bzw. Nachrüsten einer Energiekette mit einem Datenlogger zum Aufzeichnen des kinematischen Betriebsverhaltens. Der Speicher muss dabei nicht zwingend im Sensormodul verwirklicht sein, da die Daten anhand der Kommunikationseinheit laufend an eine übergeordnete Rechen- bzw. Auswerteeinheit übermittelt werden können.

Besonders bevorzugt ist als Sensor zur Erfassung kinematischer Größen des bewegten Kettenendes ein Beschleunigungssensor, insbesondere ein 3-Achsen Beschleunigungssensor, vorgesehen. Dies erlaubt durch Mehrfachintegration eine präzise Bestimmung des im Betrieb bereits zurückgelegten Gesamtfahrwegs (gefahrene Strecke) des mitnehmerseitigen Kettenendes. Somit sind präzise Rückschlüsse auf den Verschleißzustand unter Kenntnis der bestimmungsgemäßen Anwendungsbedingungen möglich. Ein Beschleunigungssensor kann zudem weitere abnutzungsrelevante Daten, wie auftretende Kräfteverhältnisse (Zug- / Schubkräfte) oder Vibrationsdaten aus dem laufenden Betrieb liefern. Zudem erlaubt ein Beschleunigungssensor inhärent eine zuverlässige Erfassung von Teilstrecken, da die Energieführungskette in vielen Anwendungen nicht nur vollständige Hübe zwischen beiden Endstellungen zurücklegt.

Alternativ zu einem Beschleunigungssensor sind auch andere Geber denkbar, wie z.B. Wegsensoren, etwa Inkrementalgeber, oder Positionsgeber wie GPS-Positionsmessgeräte oder dgl., welche eine laufende Erfassung des Fahrwegs oder Momentanposition erlauben.

Zur Verarbeitung der Sensor-Ausgabe kann im Beschleunigungssensor eine Recheneinheit, wie z.B. ein Mikroprozessor, DSP, ASIC oder dgl. vorgesehen sein, welcher aufbereite bzw. bereits verarbeitete Messdaten an die Kommunikationseinheit liefert.

Zum Zuordnen erfasster Daten zur spezifischen Kundenanwendung bzw. zur betreffenden Energieführungskette kann das Sensormodul, insbesondere die Kommunikationseinheit, eine vordefinierte, z.B. fest vorprogrammierte, eindeutige Kennung, aufweisen, welche zur eindeutigen Identifikation des Sensormoduls verwendbar ist ("Sensornummer"). Hierzu kann in einer einfachen Umsetzung bspw. die zur Adressierung der Kommunikation ohnehin bei den meisten Protokollen, wie Wi-Fi, ZigBee, CAN-Bus oder dgl. vorhandene, eineindeutige Geräteadresse verwendet werden. So kann, z.B. anhand einer geeigneten Datenbank oder in der Rechen- bzw. Auswerteeinheit, die Verknüpfung mit anwendungsspezifischen Angaben wie Kettentyp, Dimensionierung (Breite, Länge usw.), Beladungsgewicht usw. erfolgen, welche die Lebensdauer beeinflussen.

Zur Optimierung der Lebensdauervorhersage ist es vorteilhaft, wenn das Sensormodul, mindestens einen weiteren Sensor zur quantitativen Erfassung von Betriebs- und/oder Umgebungsparametern umfasst. Insbesondere ein Temperatursensor erlaubt eine Verbesserung durch Berücksichtigung von Alterungs-Modellen. Weitere Betriebs- und/oder Umgebungsparameter die erfasst werden können sind z.B. auftretende Vibrationen, Körperschall, Staubaufkommen usw. Vibrationen können dabei durch den vorgesehenen Beschleunigungssensor oder auch durch einen zusätzlichen Piezo-Sensor erfasst werden.

Auch gemäß dem zweiten Aspekt kann die Kommunikationseinheit als integrierte Schaltung zur drahtlosen Kommunikation mit einer Funk-Schnittstelle, z.B. nach Wi-Fi, Bluetooth, ZigBee oder dgl., aufweist oder aber zur Kommunikation über einen drahtgebundenen Bus, ausgeführt sein, wie z.B. einen CAN-Bus oder anderen geeigneten Industrie- bzw. Feldbus.

Zum Erstausrüsten bestehender Energieführungsketten oder auch zum Nachrüsten bereits installierter Energieführungsketten ist es vorteilhaft, wenn das Sensormodul in ein eigenes Gehäuse integriert ist und mittels geeigneter Verbindung lösbar an einem Kettenglied der Energieführungskette, insbesondere an einem Quersteg befestigbar ist. Ferner sind sonstige weiter oben als bevorzugte beschriebene Merkmale des Sensormoduls nach dem ersten Aspekt auch auf den zweiten Aspekt übertragbar.

In einer Weiterbildung ist eine Auswerte- bzw. Recheneinheit mit Schnittstelle zu der/den Kommunikationseinheit(en) vorgesehen, welche die übermittelten Daten aus allen vorhandenen Sensormodulen sammelt und als eigenständige Lösung die Lebensdauerberechnung vornimmt oder die Daten hierzu weiterleitet z.B. an eine Cloud-Lösung.

Auch der zweite Aspekt bietet besondere Vorteile bei Energieführungskette für lange Verfahrwege, die typisch mit abgleitendem oder abrollendem Obertrum ausgeführt sind.

Das System gemäß dem zweiten Aspekt eignet sich besonders zur Bestimmung des zurückgelegten Verfahrwegs zwecks Lebensdauervorhersage der Energieführungskette, sodass diese z.B. bereits vor einem Ausfall erneuert werden kann. Ferner erlaubt das System die Sammlung von Anwendungsdaten zur Optimierung der Vorhersagemodelle. Bei Erreichen einer vorgegebenen Lebensdauer, aus der laufenden Erfassung anhand des Sensormoduls errechnet wird, kann die Rechen- bzw. Auswerteeinheit eine Meldung abgeben.

Weitere vorteilhafte Merkmale und Wirkungen der Erfindung werden im Folgenden anhand einiger bevorzugter Ausführungsbeispiele unter Bezugnahme auf die beigefügten Zeichnungen näher erläutert. Dabei zeigen:
**FIG.1A-1B****:** als Prinzipskizze in Seitenansicht ein Beispiel eines Überwachungssystems mit stationären Gebern entlang des Verfahrwegs mit einem Kommunikationsbus in Art eines Blockschaltbilds;
**FIG.2****:** als Prinzipskizze in Seitenansicht ein Beispiel eines Überwachungssystems mit stationären Gebern entlang des Verfahrwegs;
**FIG.3****:** als Prinzipskizze in Seitenansicht ein Beispiel eines Überwachungssystems mit stationären Gebern entlang des Verfahrwegs;
**FIG.4****:** als Prinzipskizze in Seitenansicht ein Beispiel eines Überwachungssystems mit stationären Gebern entlang des Verfahrwegs;
**FIG.5****:** als Prinzipskizze in Seitenansicht ein Beispiel eines Überwachungssystems mit einem stationären Geber und einem Auslöseelement entlang des Verfahrwegs;
**FIG.6A****:** als Prinzipskizze in Seitenansicht ein erstes Ausführungsbeispiel eines Überwachungssystems mit einer Vielzahl Sensormodule längs in der Energieführungskette verteilt, die zur Kommunikation über Funk ausgeführt sind;
**FIG.6B-6C****:** mögliche Bauformen von Sensormodulen als schematisch Blockschaltbilder;
**FIG.7****:** als Prinzipskizze in Seitenansicht ein zweites Ausführungsbeispiel eines Überwachungssystems mit einer Vielzahl Sensormodule längs in der Energieführungskette verteilt, die zur Kommunikation über einen drahtgebundenen Bus ausgeführt sind;
**FIG.8****:** als Prinzipskizze in Seitenansicht ein Ausführungsbeispiel des Systems nach dem zweiten Aspekt, mit mehreren Energieführungsketten die je ein mitnehmerseitges Sensormodul aufweisen, das mit einer Auswerteeinheit kommuniziert; und
**FIG.9****:** eine weitere Bauform eines Sensormoduls als schematisches Blockschaltbild.

In allen Zeichnungen bezeichnen gleiche Bezugszeichen Merkmale mit gleichwertiger Beschaffenheit oder Wirkung. Zur Erleichterung werden Wiederholungen vermieden.

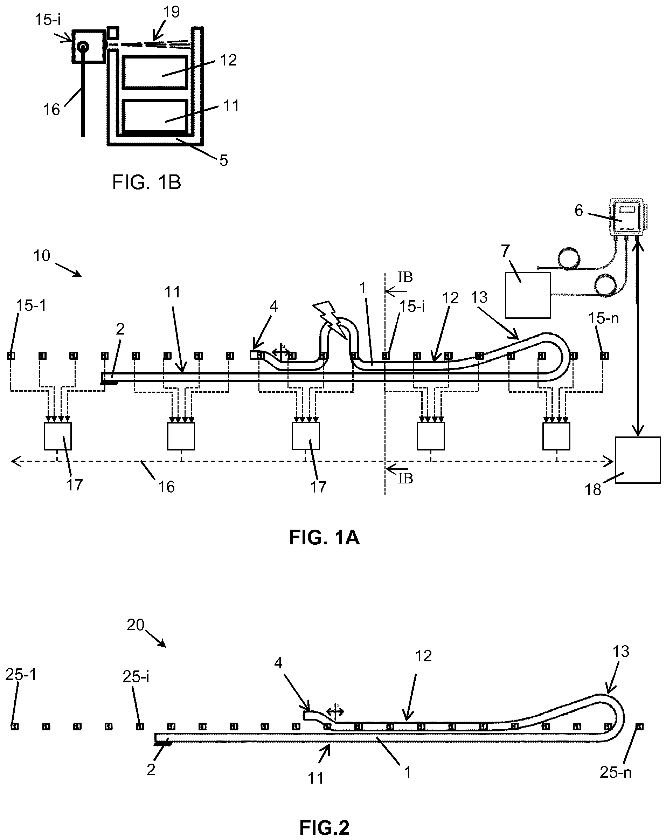

In den FIG.1-7 ist eine Energieführungskette, allgemein mit 1 bezeichnet, gezeigt mit einem liegenden stationären Trum 11, bei horizontaler Anordnung auch Untertrum genannt, einen beweglichen Trum 12, bei horizontaler Anordnung auch Obertrum genannt, sowie mit - als ortsvariablem Übergang dazwischen - einem verfahrbaren, etwa U-förmigen Umlenkbogen 13 der einen vordefinierten Krümmungsradius gewährleistet. Hier ist eine sog. "gleitende", d.h. nicht freitragende Energieführungskette 1 für lange Verfahrwege, typisch >3m gezeigt. Bei derartigen Energieführungsketten 1 kann das bewegliche Trum 12 auf dem stationären Trum 11 abgleiten oder abrollen. An sich bekannte Gleitkufen oder Gleitrollen sind nicht gezeigt. Dabei ist der vordefinierte Krümmungsradius des Umlenkbogens 13, zum Schutz der geführten Leitungen (nicht gezeigt), deutlich größer als der Kontaktabstand zwischen den Trumen 11, 12. Die Erfindung eignet sich jedoch prinzipiell auch für freitragende Energieführungsketten oder vertikale Anwendungen (nicht gezeigt).

Der Endbereich des stationären Trums 11 bildet eine erste Anschlussstelle der Energieführungskette 1 und ist an einer zur Umgebung raumfesten Basis befestigt, welche den Festpunkt 2 der Energieführungskette 10 bildet. Der Endbereich des beweglichen Trums 12 bildet eine zweite Anschlussstelle der Energieführungskette 1 und ist an einem Mitnehmer 4 befestigt, der relativ zum Festpunkt 2 beweglich ist, nämlich mit dem zu versorgenden, bewegenden Teil, z.B. von einer Industriemaschine oder -Anlage verbunden ist.

In an sich bekannter Weise bewegt sich der Mitnehmer 4, gemäß den in FIG.1-7 eingezeichneten Doppelpfeilen in eine Vorwärts- und Rückwärtsrichtung und zieht bzw. schiebt dabei die Energieführungskette 1. In FIG.1-7 ist der Mitnehmer 4 und damit die Stellung der Energieführungskette 10 rein beispielhaft, nur zur Veranschaulichung als Momentaufnahme bzw. augenblickliche Zwischenpositionen dargestellt. Die Energieführungskette 1 ist für eine quasi ebene Bewegung entlang der Vorwärts- und Rückwärtsrichtung, d.h. mit parallel bleibenden Trumen 11, 12 gestaltet und besteht im Wesentlichen aus Kettengliedern (nicht näher gezeigt) die z.B. um senkrecht zur Ebene der FIG.1-7 schwenkbare parallele Schwenkachsen gegeneinander abwinkelbar sind. Die Energieführungskette 1 kann bei allen Ausführungsformen in einer in FIG.1B schematisch näher gezeigten Führungsrinne 5 seitlich geführt sein.

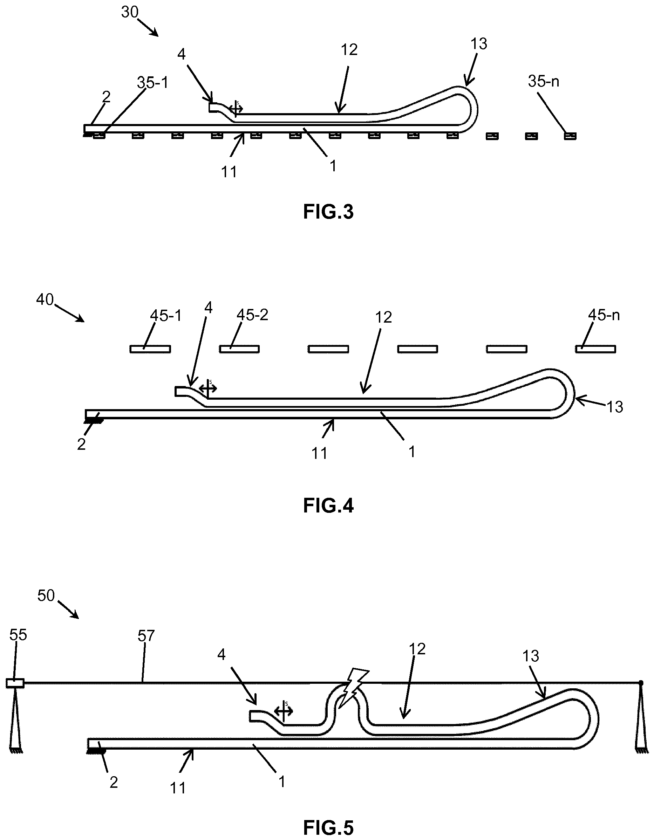

Einen seltenen aber besonders bei langen oder schnell fahrenden Energieführungsketten 1 möglichen Fehlerzustand (als "Blitz" angedeutet) zeigen hier rein schematisch und in übertriebener Darstellung nur FIG.1A und FIG.5, wobei ein Teilbereich des beweglichen Trums 12 in unerwünschter Weise aufsteigt. Die sonstigen Figuren zeigen einen normalen Verlauf der Energieführungskette 1.

Im Ausführungsbeispiel nach FIG.1A-1B ist ein Überwachungssystem 10 mit einer Vielzahl stationär an der Führungsrinne 5 befestigten Gebern 15-1 bis 15-n vorgesehen. Die Geber 15-1 bis 15-n sind über einen Feldbus 16 mit einer Busschnittstelle 18 verkabelt. Zur Erhöhung des Adressraums der Busschnittstelle 18 ist jeweils eine Gruppe von mehreren Gebern 15-i über einen geeigneten Bus-Koppler 17 an den Feldbus 16 angeschlossen. Die Busschnittstelle 18 ist zur Datenkommunikation mit einer Auswerteeinheit 6 verkabelt. Im Fall eines Fehlverhaltens der Energieführungskette 1 gibt die Auswerteeinheit 6 ein entsprechendes Signal an die Steuerung 7 der von der Energieführungskette 1 versorgten Maschine bzw. Anlage.

Beim Überwachungssystem 10 nach FIG.1A-1B sind berührungslose, optische Geber 15-i, beispielsweise Licht-Taster vorgesehen. Die Geber 15-i sind dabei, wie aus FIG.1B ersichtlich, so angeordnet, dass der Strahlengang 19 mit geringem Abstand oberhalb des nominalen Verlaufs des beweglichen Trums 12 liegt. Der Strahlengang 19 verläuft etwas in einer Ebene senkrecht zur Verfahrrichtung. Hierbei sprechen die Geber 15-i jeweils an, wenn ein Teil des Umlenkbogens 13 durch den entsprechenden Strahlengang 19 durchfährt. Es kann auch die Position des Anschlussendes am Mitnehmer 4 erkannt werden. Ferner reagieren die entsprechenden Geber 15-i, wenn ein Teilabschnitt des beweglichen Trums 12 den nominalen Verlauf nach oben hin verlässt.

Demnach kann im Ausführungsbeispiel nach FIG.1A-1B die Auswerteeinheit 6 erkennen, wo sich aktuell der Umlenkbogen 13 befindet und dies mit einer erwarteten Soll-Position vergleichen und/oder erkennen ob der bewegliche Trum 12 aus dem Soll-Verlauf ausbricht. Der Umlenkbogen 13 sollte stets eine stetige Positionsveränderung zeigen und zwischen Umlenkbogen 13 und Mitnehmer 4 darf kein Geber 15-i auslösen.

Als Erkennungsstrecke sind eine Vielzahl Geber 15-1 bis 15-n entlang des Verfahrwegs der Energieführungskette 1 verteilt an der Führungsrinne 5 befestigt. Die Geber 15-i können gemeinsam mit der Führungsrinne 5, ggf. inklusive der Feldbus-Verbindungen, z.B. mit Buskopplern 17 und Busschnittstelle 18, gefertigt und ausgeliefert werden. Ein Austausch der Energieführungskette 1 ist ohne Veränderung am Überwachungssystem 10 möglich. Alternativ zu Lichttastern als Geber 15-i können auch andere berührungslose Näherungsschalter eingesetzt werden. Der gleichmäßige Abstand zwischen den Gebern 15-i entlang des Verfahrwegs ist vorzugsweise passend zum vorgegebenen Radius im Umlenkbogen 13 gewählt, so dass dessen momentane Position hinreichend genau bestimmbar ist.

Als geeigneter Feldbus 16 kommt insbesondere ein bewährter Bus nach Industrie-Standard, z.B. ein ASI-Bus mit Linien-Topologie vorzugsweise mit Stromversorgung der Teilnehmer in Betracht. Denkbar ist auch eine Ausführung mit drahtloser Kommunikation zwischen den Gebern 15-i und der Auswerteeinheit 6, unter Verwendung eines geeigneten Schnittstellenmoduls anstelle der Busschnittstelle 18.

Das Beispiel nach FIG.2 entspricht im Wesentlichen dem vorstehenden. Das Überwachungssystem 20 unterscheidet sich vor allem dadurch, dass die Vielzahl stationärer Geber 25 hier auf Höhe des nominalen Verlaufs des beweglichen Trums 12 angeordnet sind, wenn dieses auf dem stationären Trum 11 abgeleitet oder abholt. Hierdurch kann die Auswerteeinheit 6 den nominalen Verlauf des beweglichen Trums 12 überwachen und z.B. mit einem zuvor angelernten Soll-Verlauf vergleichen. Auch bei diesem Ausführungsbeispiel kann anhand des Freiraums im Umlenkbogen 13 die aktuelle Position des Umlenkbogens 13 erkannt und überwacht werden.

Das Ausführungsbeispiel nach FIG.3 unterscheidet sich darin, dass die Geber 35-i des Überwachungssystems 30 den Querstegen des stationären Trums 11 gegenüberliegen, beispielsweise durch Befestigung an der Unterseite der Führungsrinne 5 (vgl. FIG.1B). Gemeinsam mit Informationen über die aktuelle Position des Mitnehmers 4, beispielsweise aus der Anlagensteuerung 7, kann das Überwachungssystem 6 anhand der Ausgabe der Geber 35-i ebenfalls den gewünschten Verlauf des beweglichen Trums 12 und/oder des Umlenkbogens 13 überprüfen.

Im weiteren Ausführungsbeispiel nach FIG.4 ist eine geringere Anzahl von Gebern 45-1 bis 44-n in größerem Abstand oberhalb des Umlenkbogens 13 entlang des Verfahrwegs angeordnet. Die Geber 45-1 bis 45-n, können dabei beispielsweise als Metalldetektoren, kapazitive Näherungsdetektoren oder dgl. ausgeführt sein. Hierbei kann die Auswerteeinheit 6 einen Vektor aus analogen Signalwerten der Geber 45-1 bis 45-n mit einem Soll-Vektor vergleichen. Bei unerwartetem Sprung in einer Vektorkomponente über einen Schwellwert hinaus kann die Auswerteeinheit 6 auf ein Fehlverhalten der Energieführungskette 1 schließen.

Bei den vorstehenden Ausführungsbeispielen bildet die Verteilung der Geber 15-i... 45-i entlang des Verfahrwegs eine Erkennungsstrecke. Jeder Geber 15-i... 45-i reagiert einzeln und lokal auf Annäherung der Energieführungskette 1. Auch eine mechanische Betätigung durch Berührung, beispielsweise eines Schaltkontakts ist denkbar, jedoch verschleiß anfälliger.

Ein weiteres, vereinfachtes Ausführungsbeispiel eines Überwachungssystems 50 ist in FIG.5 dargestellt. Dieses kommt mit lediglich einem elektromechanischen Geber 55 aus, der über ein langgestrecktes Auslöseelement 57 verfügt. Das Auslöseelement 57 ist entlang dem Verfahrweg des beweglichen Trums 12 erstreckt. Das Auslöseelement 57 kann dabei als Auslöseschnur ähnlich einem Stolperdraht ausgeführt sein. Das Auslöseelement 57 ist oberhalb des Nominalverlaufs des beweglichen Trums 12 diesem gegenüberliegend angeordnet und bildet selbst die Erkennungsstrecke. Wenn ein Teilabschnitt des beweglichen Trums 12 das Auslöseelement 57 berührt, löst der Geber 55 aus und signalisiert dies der Auswerteeinheit 6, welche dadurch auf ein Fehlverhalten schließt. Analog zu FIG.5 kann auch eine parallel zur Bewegungsrichtung ausgerichtete Lichtschranke (nicht gezeigt) die Erkennungsstrecke bilden und berührungslos reagieren.

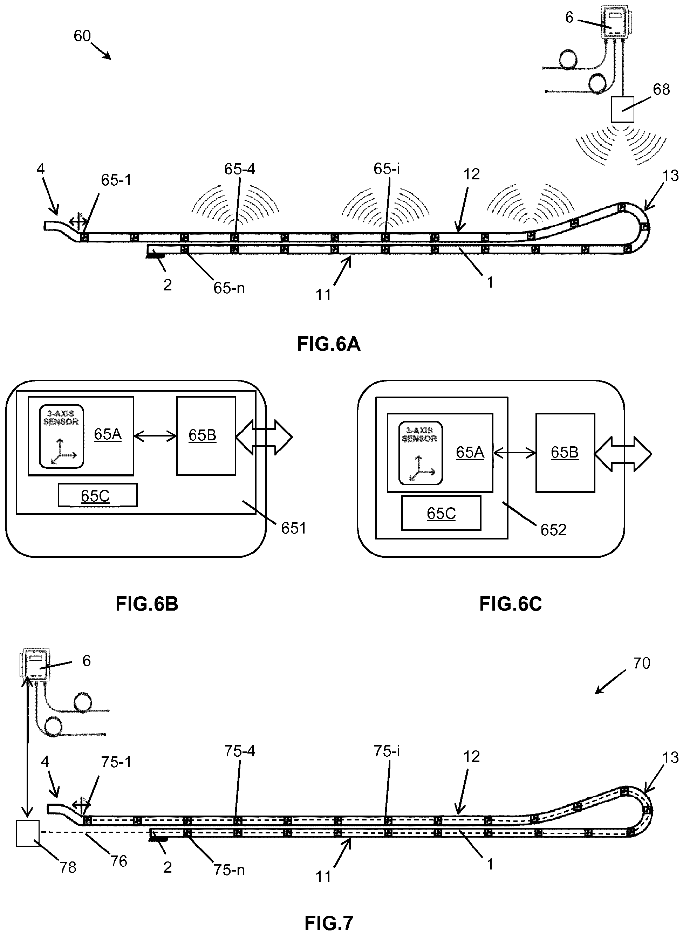

Nachfolgend werden anhand von FIG.6-7 Ausführungsbeispiele gemäß dem ersten Erfindungsaspekt beispielhaft erläutert. Beim Überwachungssystem 60 nach FIG.6 sind eine Vielzahl Sensormodule 65-1 bis 65-n in der Energieführungskette 1 über die Länge verteilt. Die Sensormodule 65-1 bis 65-n fahren mit der Energieführungskette 1 mit. Sie können somit lokal, betreffend einen bestimmten Längsabschnitt der Energieführungskette 1, anhand eines integrierten Messgrößen-Aufnehmer eine Zustandsgröße, insbesondere einen kinematischen Parameter, der Energieführungskette 1 erfassen und diesen laufend der Auswerteeinheit 6 kommunizieren. Hierzu weist jedes Sensormodul 65-1 bis 65-n gemäß FIG.6B-6C eine geeignete Kommunikationseinheit 65B auf, die vorzugsweise in jedes Sensormodul 65-i integriert ist.

Im Beispiel nach FIG.6 ist die Kommunikationseinheit 65B zur drahtlosen Datenübermittlung über Wi-Fi ausgeführt. Als Messgrößen-Aufnehmer 65A kommen insbesondere an sich bekannte 3-Achsen Beschleunigungssensoren in Betracht. Diese erlauben die quantitative Erfassung einer kinematischen Größe betreffend einen lokalen Bereich, z.B. ein Kettenglied, der Energieführungskette 1, an welcher das jeweilige Sensormodul 65-i befestigt ist. Ergänzend oder alternativ kommen auch Lagesensoren zur Erfassung der räumlichen Orientierung und/oder Höhensensoren als Messgrößen-Aufnehmer 65A in Betracht. Alle Sensormodule 65-i übermitteln laufend, z.B. getaktet mit hinreichend hoher Frequenz, Ausgabewerte an die Auswerteeinheit 6. Die Auswerteeinheit 6 ist zur Datenübermittlung mit den Kommunikationseinheiten 65B über eine geeignete Funk-Schnittstelle 68 verbunden. Zur Vermeidung unzutreffender Fehlerannahme kann auch in diesem Beispiel über die Ausgabewerte jedes Sensormoduls 65-i ein zeitlicher Mittelwert, ein gleitender Mittelwert oder dgl. gebildet werden, um nur auf sprunghafte Veränderung zu Prüfen.

Eine Vielzahl Sensormodule 65-i mit Messgrößen-Aufnehmer 65A zur messtechnischen Erfassung einer Zustandsgröße erlaubt eine präzise Erkenntnis über den momentanen Zustand der Energieführungskette 1 im laufenden Betrieb. Diese kann von der Auswerteeinheit 6 laufend mit vorbestimmten Nominalwerten verglichen werden, um bei kritischer Abweichung frühzeitig auf einen Fehlerzustand zu erkennen.

FIG.6B und FIG.6C zeigen zwei mögliche Ausführungsbeispiele für Sensormodule 65-i. Hierbei kann eine integrierte Schaltung bzw. ein IC 651 sowohl den Messgrößen-Aufnehmer 65A als auch die Kommunikationseinheit 65B als Funktionseinheiten umfassen. Gegebenenfalls können weitere Hilfsschaltungen 65C, z.B. zur Energieversorgung aus einem Energiespeicher (nicht gezeigt), Signalaufbereitung und dgl. in diesem IC 651 realisiert sein.

Gemäß FIG.6C ist eine integrierte Schaltung 652 mit den Messgrößen-Aufnehmer 65A und ggf. Hilfsschaltungen 65C getrennt von einem IC, welcher die Kommunikationseinheit 65B bildet, ausgeführt.

Alternativ zur Kommunikation über Funk ist auch eine drahtgebundene Kommunikation z.B. über einen für höhere Datenraten geeigneten Industrie- oder Feld-Bus. Ein entsprechendes Überwachungssystems 70 zeigt FIG.7, wobei die Sensormodule 75-1 bis 75-n über einen drahtgebundenen Feld-Bus 76 an eine Bus-Schnittstelle 78 angeschlossen sind. Der Feld-Bus 76 ist vorzugsweise mit Linien-Topologie in Zweidraht-Technik realisiert, was Verkabelungsaufwand innerhalb der Energieführungskette 1 minimiert. Hierbei kann neben der Datenübermittlung auch die Stromversorgung der Sensormodule 75-i über Leitungen des Feld-Bus 76, z.B. ähnlich wie in FIG.1, erfolgen.

Hierbei erfolgt die Datenübermittlung quantitativer Messwerte von den einzelnen Sensormodulen 75-i an die Auswerteeinheit 6 anhand der Bus-Schnittstelle 78, z.B. ähnlich wie in FIG.1.

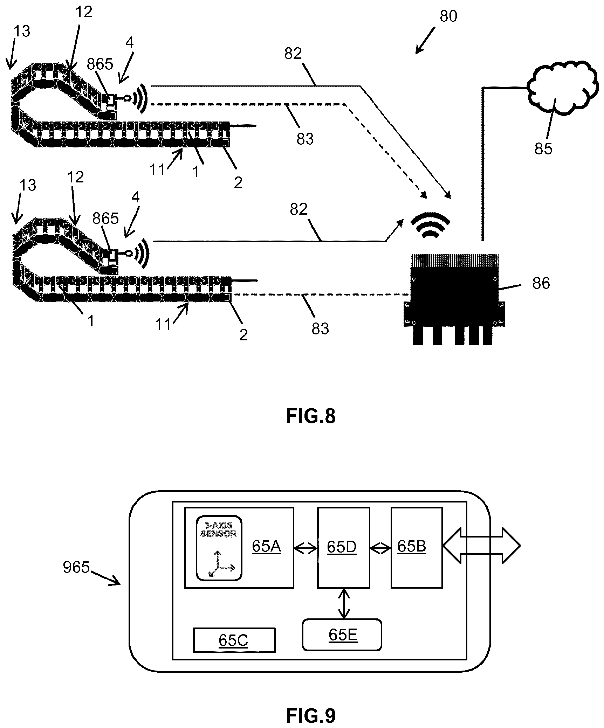

Nachfolgend wird anhand von FIG.8 ein Ausführungsbeispiel gemäß dem zweiten Erfindungsaspekt beispielhaft erläutert.

Gemäß FIG.8 ist an den Energieführungsketten 1 nahe dem Mitnehmer 4 jeweils lediglich ein Sensormodul 865, z.B. mit der Bauweise nach FIG.6 angeordnet. Die Sensormodule 865 sind z.B. am Endbefestigungsglied des beweglichen Trums 12 lösbar befestigt. Die Energieführungsketten 1 sind bestimmungsgemäß mit gleitendem Obertrum 12 ausgeführt. Sonstige Merkmale der Energieführungsketten 1 entsprechen den oben beschriebenen.

Die Merkmale des Sensormoduls 865 entsprechen z.B. denen wie zu FIG.6 oben erläutert. Jedes Sensormodul 865 hat mindestens einen Sensor 65A (FIG.6), der kontinuierlich eine aktuelle Bewegungsgröße des vom Mitnehmer 4 angetriebenen Endbereichs des beweglichen Trums 12 erfasst. Als Sensor 65A kann insbesondere ein 3-Achsen Beschleunigungssensor verwendete werden. Auch andere Geber zur Wegstrecken-, Geschwindigkeits- und/oder Beschleunigungserfassung oder einer Kombination davon als mögliche kinematische Parameter in Bezug auf das mitnehmerseitige Ende der Energieführungsketten 1 sind möglich.

Ferner hat jedes Sensormodul 865 eine geeignete Kommunikationseinheit 65B (FIG.6) zur Übermittlung gesammelter und ggf. verarbeiteter Ausgabedaten in Abhängigkeit erfasster kinematischer Größen an eine Schnittstelle der Auswerteeinheit 86. Die Kommunikation der Daten mit der rechentechnischen Auswerteeinheit 86 kann über einen Funkkanal 82, z.B. nach Wi-Fi, ZigBee oder anderem geeigneten Protokoll, z.B. in periodischen Abständen erfolgen. Dabei verfügt jede Kommunikationseinheit 65B über eine eineindeutige vorgegeben Adresse, die als Kennung des Sensormoduls 865 verwendbar ist. Hiermit ordnet die Auswerteeinheit 86 die erfassten Daten einer bestimmten Energieführungskette 1, z.B. anhand einer geeigneten Tabelle oder Datenbank zu.

Alternativ kann die Kommunikation auch drahtgebunden, z.B. über einen adressierbaren CAN-Bus 83 oder dgl. erfolgen, welcher zugleich die Sensormodul 865 mit Strom versorgt.

Die Datenausgabe der Sensormodule 865 erlaubt der Auswerteeinheit 86 eine eigenständige Ermittlung des Bewegungsverhaltens der Energieführungsketten 1. Alternativ erlaubt das System 80 ggf. einer übergeordneten Software, z.B. einer Cloud-Anwendung 85 mit welcher die Auswerteeinheit 86, z.B. über Internet verbunden ist, u.a. eine Bestimmung des tatsächlich zurückgelegten Verfahrwegs zwecks Lebensdauervorhersage. Unter Verwendung einer Cloud-Anwendung 85 ist auch z.B. eine Datensammlung zur Modelloptimierung möglich.

Das System 80 erlaubt somit u.a. gezielt die nutzbare Restlebensdauer einzelner Energieführungsketten 1 laufend aufgrund des bisherigen nutzungsabhängigen, anwendungs- und betriebsspezifischen Bewegungsverhaltens der jeweiligen Energieführungskette 1 vorherzusagen.

FIG.9 zeigt eine Weiterbildung eines Sensormoduls 965, das einen Beschleunigungssensor 65A und eine Kommunikationseinheit 65B, z.B. gemäß FIG.6 aufweist. Ferner ist ein Sensor 65E zur quantitativen Erfassung von Betriebs- und/oder

Umgebungsparametern, z.B. ein Temperatursensor vorgesehen. Zur Aufbereitung der Ausgabesignale der Sensoren 65A, 65E ist eine Recheneinheit 65D, z.B. ein Mikroprozessor oder DSP vorgesehen, welche die Ausgaben kontinuierlich digital verarbeitet und aufbereiten, z.B. u.a. Beschleunigungsmessungen glättet und Temperaturwerte mittelt. Der Recheneinheit 65D erzeugt daraus Ausgabedaten und liefert diese zur Weiterleitung an die Kommunikationseinheit 65B. Auch beim Sensormodul 965 können alle Komponenten 65A... 65E z.T. getrennt oder integriert, z.B. in Form von integrierten Schaltungen realisiert sein, z.B. als voll integrierte ASIC-Lösung. Weitere Messdaten des zweiten Sensors 65E erlauben der Auswerteeinheit 86 bzw. einer Cloud-Anwendung 85 bessere Vorhersagen der Restlebensdauer bzw. eine weitergehende Modelloptimierung.

### Bezugszeichenliste

FIG.1-6
   - 1: Energieführungskette
   - 2: Festpunkt
   - 4: Mitnehmer
   - 5: Führungsrinne
   - 6: Auswerteeinheit
   - 7: Steuerung
   - 11: Stationäres Trum
   - 12: Bewegliches Trum
   - 13: Umlenkbogen
FIG.1A-1B
   - 10: Überwachungssystem
   - 15-1... 15-n: Geber
   - 16: Feldbus
   - 17: Bus-Koppler
   - 18: Busschnittstelle
   - 19: Strahlengang
FIG.2-4
   - 20; 30; 40: Überwachungssystem
   - 25-1... 25-n; 35-1... 35-n; 45-1... 45-n: Geber
FIG.5
   - 50: Überwachungssystem
   - 55: Geber
   - 57: Auslöseelement
FIG.6A-6C
   - 60: Überwachungssystem
   - 65-1 bis 65-n: Sensormodule
   - 65A: Messgrößen-Aufnehmer
   - 65B: Kommunikationseinheit

   - 65C: Hilfsschaltungen
   - 651; 652: integrierte Schaltung
   - 68: Funk-Schnittstelle
FIG.7
   - 70: Überwachungssystem
   - 75-1 bis 75-n: Sensormodule
   - 76: Feldbus
   - 78: Bus-Schnittstelle
FIG. 8
   - 1: Energieführungskette
   - 2: Festpunkt
   - 4: Mitnehmer
   - 11, 12: Trume
   - 13: Umlenkbogen
   - 80: Überwachungssystem
   - 82: Funkkanal
   - 83: CAN-Bus
   - 85: Cloud-Anwendung
   - 86: Auswerteeinheit
   - 865: Sensormodul
FIG. 9
   - 965: Sensormodul
   - 65A: Beschleunigungssensor
   - 65B: Kommunikationseinheit
   - 65C: Hilfsschaltungen
   - 65D: Recheneinheit
   - 65E: Temperatursensor
   - 68: Funk-Schnittstelle

## Patentansprüche

1. Überwachungssystem (60; 70) für den Betrieb einer Energieführungskette (1) zum Führen mindestens einer Leitung, wie z.B. eines Kabels, Schlauchs oder dergleichen, zwischen einer ersten Anschlussstelle zum Anschluss an einer Basis (2) und einer dazu relativbeweglichen zweiten Anschlussstelle zum Anschluss an einem Mitnehmer (4), umfassend
eine Energieführungskette (1) die entlang eines Verfahrwegs verfahrbar ist und dabei ein bewegliches Trum (12), ein stationäres Trum (11) und dazwischen einen Umlenkbogen (13) bildet;
eine Anordnung mit mehreren Sensoren an der Energieführungskette, die jeweils einen Messgrößen-Aufnehmer umfassen, um messtechnisch eine Größe zu erfassen und;
eine Auswerteeinheit (6) die mit den Sensoren zusammenwirkt um zu überwachen, ob im Betrieb der Energieführungskette ein Fehlerzustand auftritt; wobei
eine Vielzahl Sensormodule (65-i; 75-i) als Sensoren entlang der Länge der Energieführungskette verteilt an oder in dieser befestigt sind;
**dadurch gekennzeichnet,**
- **dass** jedes Sensormodul (65-i; 75-i) eine Kommunikationseinheit (65B) aufweist zur Übermittlung von Ausgaben an die Auswerteeinheit (6), welche von der messtechnisch erfassten Größe abhängen; und
- **dass** jedes der Sensormodule (65-i; 75-i) mindestens eine integrierte Schaltung (651; 652) umfasst, welche als Messgrößen-Aufnehmer (65A) einen Beschleunigungssensor (65A), insbesondere einen 3-Achsen Beschleunigungssensor, zur quantitativen Erfassung einer kinematischen Größe umfasst und entsprechende Ausgaben an die Auswerteeinheit (6) übermittelt.

2. Überwachungssystem nach Anspruch 1, **dadurch gekennzeichnet, dass** die integrierte Schaltung (651; 652)
- einen Lagesensor umfasst, zur quantitativen Erfassung der räumlichen Orientierung; und/oder
- einen Höhensensor umfasst, zur quantitativen Erfassung einer absoluten Höhe im Raum,
und entsprechende Ausgaben an die Auswerteeinheit übermittelt.

3. Überwachungssystem nach Anspruch 1 oder 2, **dadurch gekennzeichnet, dass** jedes Sensormodul (65-i; 75-i)
- einen Energiespeicher; oder
- eine Schaltung zur kontaktlosen induktiven Energieübertragung, insbesondere mit einer Empfangsspule zur Nahfeld-Kopplung, aufweist.

4. Überwachungssystem nach einem der Ansprüche 1 bis 3,
**dadurch gekennzeichnet, dass** die Sensormodule (65-i; 75-i) in gleichmäßigem Abstand entlang der Längsrichtung der Energieführungskette (1) angeordnet sind, wobei der Abstand vorzugsweise kleiner oder gleich der Bogenlänge des Umlenkbogens (13), insbesondere kleiner oder gleich dem 1,6-fachen des Umlenkbogen-Radius ist.

5. Überwachungssystem (80) für eine Energieführungskette (1) zum Führen mindestens einer Leitung, wie z.B. eines Kabels, Schlauchs oder dergleichen, zwischen einer ersten Anschlussstelle zum Anschluss an einer Basis (2) und einer dazu relativbeweglichen zweiten Anschlussstelle zum Anschluss an einem Mitnehmer (4), umfassend eine Energieführungskette (1) die entlang eines Verfahrwegs verfahrbar ist und dabei ein bewegliches Trum (12), ein stationäres Trum (11) und dazwischen einen Umlenkbogen (13) bildet; **gekennzeichnet durch**
mindestens ein Sensormodul (65; 865; 965), das an einem Endbereich des beweglichen Trums (12) mit der zweiten Anschlussstelle oder am Mitnehmer angeordnet ist, und
- einen Sensor (65A) zur quantitativen Erfassung einer kinematischen Größe, insbesondere Beschleunigung, Geschwindigkeit und/oder Position, des Endbereichs; sowie
- eine Kommunikationseinheit (65B) zur Übermittlung von Ausgabedaten in Abhängigkeit erfasster kinematischer Größen, an eine Schnittstelle oder eine Auswerteeinheit (86) .

6. Überwachungssystem nach Anspruch 5, **dadurch gekennzeichnet, dass** der Sensor (65A) zur Erfassung einer kinematischen Größe ein Beschleunigungssensor, insbesondere ein 3-Achsen Beschleunigungssensor, ist.

7. Überwachungssystem nach Anspruch 5 oder 6, **dadurch gekennzeichnet, dass** das Sensormodul (65; 865; 965), insbesondere die Kommunikationseinheit (65B), eine eindeutige Kennung aufweist, welche zur Identifikation des Sensormoduls verwendbar ist.

8. Überwachungssystem nach Anspruch 5, **dadurch gekennzeichnet, dass** das Sensormodul (65; 865; 965), mindestens einen weiteren Sensor (65E) zur quantitativen Erfassung von Betriebs- und/oder Umgebungsparametern umfasst, wobei der weitere Sensor (65E) insbesondere ein Temperatursensor ist.

9. Überwachungssystem nach einem der Ansprüche 1 bis 8,
**dadurch gekennzeichnet, dass** die Kommunikationseinheit (65B) in einer integrierten Schaltung (651; 652) realisiert ist, insbesondere als Bestandteil des Sensormoduls (65-i; 75-i).

10. Überwachungssystem nach einem der Ansprüche 1 bis 9,
**dadurch gekennzeichnet, dass** die Kommunikationseinheit (65B) zur drahtlosen Daten-Kommunikation über Funk oder zur drahtgebundenen Daten-Kommunikation über einen Datenbus (76) ausgeführt ist, vorzugsweise über ein Kommunikations-Protokoll mit Fehlerkorrektur.

11. Überwachungssystem nach Anspruch 5, **dadurch gekennzeichnet, dass**
- das Sensormodul (65; 865; 965) lösbar an einem Kettenglied der Energieführungskette, insbesondere an einem Quersteg befestigt ist.

12. Überwachungssystem nach Anspruch 1, **dadurch gekennzeichnet, dass** das Sensormodul
- in einen lösbar an einem Kettenglied der Energieführungskette befestigten Quersteg integriert ist; oder
- in einen lösbar an einem Kettenglied der Energieführungskette befestigten Trennsteg integriert ist.

13. Überwachungssystem nach einem der vorstehenden Ansprüche 1 bis 8, **dadurch gekennzeichnet, dass** die Energieführungskette (1) mit abgleitendem oder abrollendem Obertrum (12), insbesondere für lange Verfahrwege, ausgeführt ist.

14. Kettenglied für ein Überwachungssystem einer Energieführungskette (1) zum Führen mindestens einer Leitung, wie z.B. eines Kabels, Schlauchs oder dergleichen, zwischen einer ersten Anschlussstelle zum Anschluss an einer Basis (2) und einer dazu relativbeweglichen zweiten Anschlussstelle zum Anschluss an einem Mitnehmer (4), wobei die Energieführungskette (1) entlang eines Verfahrwegs verfahrbar ist und dabei ein bewegliches Trum (12), ein stationäres Trum (11) und dazwischen einen Umlenkbogen (13) bildet; **gekennzeichnet durch**
mindestens ein Sensormodul (65; 865; 965), das
- einen Beschleunigungssensor (65A), insbesondere ein 3-Achsen Beschleunigungssensor, zur quantitativen Erfassung einer kinematischen Größe, insbesondere Beschleunigung, Geschwindigkeit und/oder Position, des Kettenglieds; sowie
- eine Kommunikationseinheit (65B) zur Übermittlung von Ausgabedaten in Abhängigkeit erfasster kinematischer Größen, an eine Schnittstelle oder eine Auswerteeinheit (86), umfasst; und dass
das Sensormodul (65; 865; 965) lösbar am Kettenglied, insbesondere an einem Quersteg befestigt ist, oder in einen lösbar am Kettenglied befestigten Quersteg oder Trennsteg integriert ist.

15. Kettenglied für ein Überwachungssystem nach Anspruch 14, **dadurch gekennzeichnet, dass**
die Kommunikationseinheit (65B) als eine integrierte Schaltung (651; 652) realisiert ist, insbesondere als Bestandteil des Sensormoduls (65-i; 75-i), und zur drahtlosen Daten-Kommunikation über Funk ausgeführt ist, vorzugsweise über ein Kommunikations-Protokoll mit Fehlerkorrektur; und/oder
das Sensormodul (65; 865; 965) mindestens einen weiteren Sensor (65E) zur quantitativen Erfassung von Betriebs-und/oder Umgebungsparametern umfasst, wobei der weitere Sensor (65E) insbesondere ein Temperatursensor ist.

16. Verwendung eines Überwachungssystems nach einem der vorstehenden Ansprüche 1 bis 13 zur Bestimmung des zurückgelegten Verfahrwegs zwecks Lebensdauervorhersage und/oder zwecks Überwachung der Energieführungskette.

## Claims

1. Monitoring system (60; 70) for the operation of an energy chain (1) for guiding at least one line, e.g. a cable, hose or the like, between a first connection point for the connection to a base (2), and a second connection point, relatively moveable thereto, for the connection to a driver (4), including
an energy chain (1), which is displaceable along a displacement path while forming a moveable strand (12), a stationary strand (11) and a deflection arc (13) therebetween; an arrangement with multiple sensors on the energy chain, which include measurand detectors in order to detect a parameter by measurement; and
an evaluation unit (6), which interacts with the sensors in order to monitor whether an error condition occurs in operation of the energy chain; wherein
a plurality of sensor modules (65-i; 75-i) are distributed as sensors along the length of the energy chain and are attached to the energy chain or inside the energy chain;
**characterized in**
- **that** each sensor module (65-i; 75-i) comprises a communication unit (65B) for the transmission of outputs to the evaluation unit (6), which depend on the parameter detected by measurement; and
- **that** each of the sensor modules (65-i; 75-i) includes at least one integrated circuit (651; 652) that comprises an acceleration sensor (64A), in particular a 3-axis acceleration sensor, as measurand detector (65A) for the quantitative detection of a kinematic parameter, and transmits corresponding outputs to the evaluation unit (6).

2. Monitoring system according to claim 1, **characterized in that** the integrated circuit (651; 652)
- includes a position sensor for the quantitative detection of the spatial orientation; and/or
- includes a height sensor for the quantitative detection of an absolute height in the space,
and transmits corresponding outputs to the evaluation unit.

3. Monitoring system according to claim 1 or 2, **characterized in that** each sensor module (65-i; 75-i) comprises
- an energy storage; or
- a circuit for the contactless inductive energy transmission, in particular with a receiving coil for near field coupling.

4. Monitoring system according to any one of claims 1 to 3, **characterized in that** the sensor modules (65-1; 75-i) are arranged at a regular interval along the longitudinal direction of the energy chain (1), wherein the distance is preferably smaller than or equal to the arc length of the deflection arc (13), in particular smaller than or equal to 1.6 times the deflection arc radius.

5. Monitoring system (80) for an energy chain (1) for guiding at least one line, such as e.g. a cable, hose or the like, between a first connection point for the connection to a base (2), and a second connection point, relatively moveable thereto, for the connection to a driver (4), including an energy chain (1) which is displaceable along a displacement path while forming a moveable strand (12), a stationary strand (11) and a deflection arc (13) located therebetween; **characterized by**
at least one sensor module (65; 865; 965), which is arranged at an end region of the moveable strand (12) that has the second connection point or arranged at the driver, and
- a sensor (65A) for the quantitative detection of a kinematic parameter, in particular acceleration, velocity and/or position, of the end region; as well as
- a communication unit (65B) for the transmission of output data dependent upon detected kinematic parameters, to an interface or an evaluation unit (86).

6. Monitoring system according to claim 5, **characterized in that** the sensor (65A) for the detection of a kinematic parameter is an acceleration sensor, in particular a 3-axis acceleration sensor.

7. Monitoring system according to claim 5 or 6, **characterized in that** the sensor module (65; 865; 965), in particular the communication unit (65B), comprises a unique identifier, which can be used for the identification of the sensor module.

8. Monitoring system according to claim 5, **characterized in that** the sensor module (65; 865; 965) includes at least one further sensor (65E) for the quantitative detection of operating and/or environmental parameters, while the further sensor (65E) is in particular a temperature sensor.

9. Monitoring system according to any one of claims 1 to 8, **characterized in that** the communication unit (65B) is implemented in an integrated circuit (651; 652), in particular as an integral part of the sensor module (65-i; 75-i).

10. Monitoring system according to any one of claims 1 to 9, **characterized in that** the communication unit (65B) is configured for wireless data communication via radio, or for wired data communication via a data bus (76), preferably via a communication protocol with error correction.

11. Monitoring system according to claim 5, **characterized in that**
- the sensor module (65; 865; 965) is releasably attached to a chain element of the energy chain, in particular to a cross-web.

12. Monitoring system according to claim 1 , **characterized in that** the sensor module
- is integrated in a cross-web releasably attached to a chain element of the energy chain; or
- is integrated in a separation web releasably attached to a chain element of the energy chain.

13. Monitoring system according to any one of the preceding claims 1 to 8, **characterized in that** the energy chain (1) is configured with sliding-off or rolling-off upper strand (12), in particular for long displacement paths.

14. Chain element for a monitoring system of an energy chain (1) for guiding at least one line, such as e.g. a cable, hose or the like, between a first connection point for the connection to a base (2), and a second connection point, relatively moveable thereto, for the connection to a driver (4), while the energy chain (1) is displaceable along a displacement path while forming a moveable strand (12), a stationary strand (11) and a deflection arc (13) located therebetween; **characterized in that** at least one sensor module (65; 865; 965), which comprises
- an acceleration sensor (65A), in particular a 3-axis acceleration sensor, for the quantitative detection of a kinematic parameter, in particular acceleration, velocity and/or position, of the chain element; as well as
- a communication unit (65B) for the transmission of output data dependent upon detected kinematic parameters, to an interface or an evaluation unit (86); and that the sensor module (65; 865; 965) is releasably attached to the chain element, in particular to a cross-web, or is integrated in a cross-web or separation web releasably attached to the chain element.

15. Chain element for a monitoring system according to claim 14, **characterized in that**
the communication unit (65B) is implemented as an integrated circuit (651; 652), in particular as an integral part of the sensor module (65-i; 75-i), and the communication unit (65B) is configured for wireless data communication via radio, preferably via a communication protocol with error correction and/or
the sensor module (65; 865; 965) includes at least one further sensor (65E) for the quantitative detection of operating and/or environmental parameters, while the further sensor (65E) is in particular a temperature sensor.

16. Use of a monitoring system according to any one of the
preceding claims 1 to 13, for the determination of the travelled displacement path for the purpose of predicting the service life and/or for the purpose of monitoring of the energy chain.

## Revendications

1. Système de surveillance (60; 70) du fonctionnement d'une chaîne de guidage d'énergie (1) pour le guidage d'au moins une ligne, telle qu'un câble, un tuyau ou similaire, entre un premier point de connexion pour la connexion à une base (2) et un deuxième point de connexion, mobile par rapport à celle-ci, pour la connexion à un entraîneur (4) comprenant
une chaîne de guidage d'énergie (1) qui peut être déplacée le long d'une course de déplacement, en formant un brin mobile (12), un brin fixe (11) et un arc de déviation (13) entre eux;
un agencement de plusieurs capteurs sur la chaîne de guidage d'énergie, chacun desquels comprenant un transducteur de variable mesurée afin de détecter une variable mesurée; et une unité d'évaluation (6) qui interagit avec les capteurs pour surveiller si une condition de défaut se produit pendant le fonctionnement de la chaîne de guidage d'énergie;
dans lequel une pluralité de modules de capteurs (65-i; 75-i) sont montés en tant que capteurs répartis sur la longueur de la chaîne de guidage d'énergie sur ou dans ladite chaîne, **caractérisé**
**en ce que** chaque module de capteur (65-i; 75-i) comporte une unité de communication (65B) pour transmettre des sorties à l'unité d'évaluation (6) qui dépendent de la quantité détectée par une technique de mesure; et
**en ce que** chacun des modules de capteurs (65-i; 75-i) comprend au moins un circuit intégré (651; 652) qui comprend, en tant que capteur de variable mesurée (65A), un capteur d'accélération (65A), en particulier un capteur d'accélération à 3 axes pour la détection quantitative d'un variable cinématique, et transmet des sorties correspondantes à l'unité d'évaluation (6).

2. Système de surveillance selon la revendication 1, **caractérisé en ce que** le circuit intégré (651; 652)
- comprend un capteur de position, pour la détection quantitative de l'orientation spatiale; et/ou
- un capteur de hauteur pour détecter quantitativement une hauteur absolue dans l'espace
et transmet les sorties correspondantes à l'unité d'évaluation.

3. Système de surveillance selon la revendication 1 ou 2, **caractérisé en ce que** chaque module de capteur (65-i; 75-i) comporte
- un dispositif de stockage d'énergie; ou
- un circuit pour le transfert d'énergie inductive sans contact, en particulier avec une bobine réceptrice pour le couplage en champ proche.

4. Système de surveillance selon l'une quelconque des revendications 1 à 3, **caractérisé en ce que** les modules de capteur (65-i; 75-i) sont disposés à une distance uniforme le long de la direction longitudinale de la chaîne de guidage d'énergie (1), la distance étant de préférence inférieure ou égale à la longueur de l'arc de déviation (13), en particulier inférieure ou égale à 1,6 fois le rayon de l'arc de déviation.

5. Système de surveillance (80) d'une chaîne de guidage d'énergie (1) pour le guidage d'au moins une ligne, telle qu'un câble, un tuyau ou similaire, entre un premier point de connexion pour la connexion à une base (2) et un deuxième point de connexion, mobile par rapport à celle-ci, pour la connexion à un entraîneur (4) comprenant
une chaîne de guidage d'énergie (1) qui peut être déplacée le long d'une course de déplacement, en formant un brin mobile (12), un brin fixe (11) et un arc de déviation (13) entre eux; **caractérisé par**
au moins un module de capteur (65; 865; 965) disposé à une partie d'extrémité du brin mobile (12) avec le deuxième point de connexion ou au niveau du conducteur, et
- un capteur (65A) pour la détection quantitative d'une variable cinématique, en particulier l'accélération, la vitesse et/ou la position, de la partie d'extrémité; et
- une unité de communication (65B) pour transmettre des données de sortie en fonction des variables cinématiques détectées à une interface ou à une unité d'évaluation (86).

6. Système de surveillance selon la revendication 5, **caractérisé en ce que** le capteur (65A) pour détecter une variable cinématique est un capteur d'accélération, en particulier un capteur d'accélération à 3 axes.

7. Système de surveillance selon la revendication 5 ou 6, **caractérisé en ce que** le module capteur (65; 865; 965), en particulier l'unité de communication (65B), possède un identifiant unique qui peut être utilisé pour identifier le module de capteur.

8. Système de surveillance selon la revendication 5, **caractérisé en ce que** le module de capteur (65; 865; 965) comprend au moins un autre capteur (65E) pour la détection quantitative de paramètres de fonctionnement et/ou d'environnement, l'autre capteur (65E) étant en particulier un capteur de température.

9. Système de surveillance selon l'une quelconque des revendications 1 à 8, **caractérisé en ce que** l'unité de communication (65B) est mise en œuvre dans un circuit intégré (651; 652), notamment en tant que composant du module de capteur (65-i ; 75-i).

10. Système de surveillance selon l'une quelconque des revendications 1 à 9, **caractérisé en ce que** l'unité de communication (65B) est adaptée pour une communication de données sans fil par radio ou pour une communication de données câblée par un bus de données (76), de préférence par un protocole de communication avec correction d'erreurs.

11. Système de surveillance selon la revendication 5, **caractérisé en ce que**
- le module de capteur (65; 865; 965) est fixé de manière amovible à un maillon de la chaîne de guidage d'énergie, en particulier à une barre transversale.

12. Système de surveillance selon la revendication 1, **caractérisé en ce que** le module de capteur
- est intégré dans une barre transversale fixée de manière amovible à un maillon de la chaîne d'énergie; ou
- est intégré dans une barre de séparation fixée de manière amovible à un maillon de la chaîne de guidage de l'énergie.

13. Système de surveillance selon l'une quelconque des revendications précédentes 1 à 8, **caractérisé en ce que** la chaîne de guidage d'énergie (1) est conçue avec un brin supérieur (12) coulissant ou roulant, en particulier pour les grandes distances de déplacement.

14. Maillon de chaîne pour un système de surveillance d'une chaîne de guidage d'énergie (1) pour le guidage d'au moins une ligne, telle qu'un câble, un tuyau ou similaire, entre un premier point de connexion pour la connexion à une base (2) et un deuxième point de connexion, mobile par rapport à celle-ci, pour la connexion à un entraîneur (4), la chaîne de guidage d'énergie étant mobile le long une course de déplacement, en formant un brin mobile (12), un brin fixe (11) et un arc de déviation (13) entre eux; **caractérisé par** au moins un module de capteur (65; 865; 965) qui comprend
- un capteur d'accélération (65A), en particulier un capteur d'accélération à 3 axes, pour la détection quantitative d'une variable cinématique, en particulier l'accélération, la vitesse et/ou la position, du maillon de chaîne; ainsi que
- une unité de communication (65B) pour transmettre des données de sortie en fonction des variables cinématiques détectées à une interface ou à une unité d'évaluation (86); et **caractérisé en ce que** le module de capteur (65; 865; 965) est fixé de manière amovible au maillon de chaîne, en particulier à une barre transversale, ou est intégré de manière amovible dans une barre transversale ou une barre de séparation fixées de manière amovible à un maillon de chaîne.

15. Maillon de chaîne pour un système de surveillance selon la revendication 14,
**caractérisé en ce que** l'unité de communication (65B) est réalisée comme un circuit intégré (651; 652), en particulier comme composant du module de capteur (65-i; 75-i), et est adaptée pour une communication de données sans fil par radio, de préférence par un protocole de communication avec correction d'erreurs; et/ou
le module de capteur (65; 865; 965) comprend au moins un autre capteur (65E) pour la détection quantitative de paramètres de fonctionnement et/ou d'environnement, l'autre capteur (65E) étant en particulier un capteur de température.

16. Utilisation d'un système de surveillance selon l'une quelconque des revendications précédentes 1 à 13 pour déterminer la distance parcourue pour la prédiction de la durée de vie et/ou pour la surveillance de la chaîne de guidage d'énergie.
